# EUROPEAN PATENT SPECIFICATION

(11) **EP 3 809 189 B1**
(45) Date of publication and mention of the grant of the patent: **28.08.2024**
(21) Application number: 19819091.0
(22) Date of filing: 11.06.2019
(51) Int. Cl.: G02B 5/00, G02B 5/08, H04N 13/302, G02B 5/124, G02B 30/56, G02B 30/60, G02B 5/136, G09F 19/18, G09F 13/18, G09F 19/16, G02B 27/01

(54) **AERIAL-DISPLAY APPARATUS**
LUFTANZEIGEGERÄT
APPAREIL D'AFFICHAGE AÉRIEN

(30) Priority: 12.06.2018 JP 2018112203
(43) Date of publication of application: 21.04.2021
(73) Proprietor: Toppan Printing Co., Ltd., Tokyo 110-0016 (JP)
(72) Inventor: DAIKU, Yasuhiro, Tokyo 110-0016 (JP)
(74) Representative: TBK
(86) International application number: PCT/JP2019/023134
(87) International publication number: WO 2019/240137

(56) References cited:
- WO-A1-2007/100458
- WO-A1-2013/084592
- WO-A1-2019/030991
- JP-A- 2000 214 789
- JP-A- 2009 528 567
- JP-A- 2011 053 716
- JP-A- 2013 257 529
- JP-A- 2013 257 529
- JP-A- 2015 191 051
- JP-A- 2015 191 051
- JP-A- 2017 156 469
- ANONYMOUS: "Head-up display - Wikipedia", 12 May 2018 (2018-05-12), pages 1 - 11, XP055886514, Retrieved from the Internet <URL:https://web.archive.org/web/20180512173017/https://en.wikipedia.org/wiki/Head-up_display> [retrieved on 20220202]

## Description

### FIELD

The present invention relates to an aerial display apparatus.

### BACKGROUND

An aerial display apparatus capable of displaying an image, a moving image, etc. as an aerial image has been studied and is expected as a new human-machine interface. The aerial display apparatus reflects light emitted from a display surface of a display device and forms a real image in the air using, for example, a dihedral corner reflector array in which dihedral corner reflectors are arranged in an array (e.g., Jpn. Pat. Appln. KOKAI Publication No. 2017-67933). In the display method using the dihedral corner reflector array, aberration does not occur, and a real image (hereinafter, an "aerial image") is displayed at a plane-symmetrical position.

Prior art is disclosed in document JP 2017 156469 A, describing an imaging optical system, an optical system, a display, an electronic apparatus, a display method, and a program, as well as in document JP 2013 257529 A, describing an optical system. Further prior art is disclosed in document WO 2007/100458 A1, describing an improved light control film composite and LCD device comprising the same, as well as in document JP 2000 214789 A, describing a plane video display device. Moreover, further prior art is disclosed in document JP 2015 191051 A, describing a spatial video display device, as well as in a Wikipedia article, entitled and describing a head-up display (12 May 2018 (2018-05-12), pages 1-11, XP55886514, Retrieved from the Internet: URL:https://web.archive.org/web/20180512173017/https://en. wikipedia.org/wiki/Head-up_display).

### SUMMARY

### TECHNICAL PROBLEM

The present invention provides an aerial display apparatus capable of achieving miniaturization while ensuring the display quality of an aerial image.

### SOLUTION TO PROBLEM

An aerial display apparatus of an embodiment according to the invention is defined in claim 1. Further advantageous developments are outlined in the dependent claims.

### ADVANTAGEOUS EFFECTS OF INVENTION

According to the present invention, it is possible to provide an aerial display apparatus capable of achieving miniaturization while ensuring the display quality of an aerial image.

### BRIEF DESCRIPTION OF THE DRAWINGS

FIG. 1 is a perspective view of a mirror device.
FIG. 2 is a schematic diagram showing principles of an aerial display apparatus.
FIG. 3 is a schematic diagram showing a state of light that is reflected twice by a single optical element of the mirror device.
FIG. 4 is a diagram showing an optical path when the optical element shown in FIG. 3 is viewed from a z direction.
FIG. 5 is a diagram showing an optical path when the optical element shown in FIG. 3 is viewed from a y direction.
FIG. 6 is a diagram showing an optical path when the optical element shown in FIG. 3 is viewed from an x direction.
FIG. 7 is a schematic diagram showing a ghost displayed by the aerial display apparatus.
FIG. 8 is a schematic diagram showing a state of light that is reflected once by a single optical element.
FIG. 9 is a diagram showing an optical path when the optical element shown in FIG. 8 is viewed from the z direction.
FIG. 10 is a diagram showing an optical path when the optical element shown in FIG. 8 is viewed from the y direction.
FIG. 11 is a diagram showing an optical path when the optical element shown in FIG. 8 is viewed from the x direction.
FIG. 12 is a schematic diagram showing unwanted light of the aerial display apparatus.
FIG. 13 is a schematic diagram showing a state of light that is not reflected at all by a single optical element.
FIG. 14 is a diagram showing an optical path when the optical element shown in FIG. 13 is viewed from the z direction.
FIG. 15 is a diagram showing an optical path when the optical element shown in FIG. 13 is viewed from the y direction.
FIG. 16 is a diagram showing an optical path when the optical element shown in FIG. 13 is viewed from the x direction.
FIG. 17 is a block diagram showing a configuration of the aerial display apparatus according to the embodiment.
FIG. 18 is a perspective view showing an optical configuration of the aerial display apparatus according to the embodiment.
FIG. 19 is a layout diagram of an optical element in a mirror device in the aerial display apparatus.
FIG. 20 is a diagram showing an optical path when the optical element shown in FIG. 19 is viewed from the z direction.
FIG. 21 is a perspective view showing a configuration of a display unit in the aerial display apparatus.
FIG. 22 is a diagram showing how light is emitted at a light source section in the display unit.
FIG. 23 is a diagram showing light intensity according to an angle of emission of light emitted from a light guide plate of the light source section.
FIG. 24 is a diagram showing a light intensity according to an angle of emission of light emitted from an optical sheet of the light source section.
FIG. 25 is a plan view of a liquid crystal display device of the light source section.
FIG. 26 is a cross-sectional view of a liquid crystal display device of the light source section.
FIG. 27 is a plan view of a light control device in the aerial display apparatus.
FIG. 28 is a cross-sectional view of a light control device in the aerial display apparatus.
FIG. 29 is a diagram showing light intensity according to an angle of emission of light emitted from the light control device.
FIG. 30 is a schematic diagram showing an optical configuration of the aerial display apparatus.
FIG. 31 is a perspective view showing a configuration of a display unit according to a modification.
FIG. 32 is a diagram showing a light intensity according to an angle of emission of light emitted from a light guide plate according to a modification.
FIG. 33 is a schematic diagram showing an optical configuration of an aerial display apparatus according to a modification.
FIG. 34 is a schematic diagram showing an optical configuration of an aerial display apparatus according to a comparative example.
FIG. 35 is a schematic diagram showing an optical configuration of an aerial display apparatus according to another modification.

### DETAILED DESCRIPTION

Hereinafter, embodiments will be described with reference to the drawings. The drawings are schematic or conceptual, and the dimensions, ratios, and the like of each drawing are not necessarily the same as the actual ones. Even when the same portions are shown in the drawings, the dimensional relationship and the ratio may be different. In particular, several embodiments described below exemplify an apparatus and a method for embodying the technical idea of the present invention, and the technical idea of the present invention is not specified by the shape, structure, arrangement, or the like of the components. In the following description, elements having the same function and configuration will be denoted by the same reference numerals, and redundant descriptions will be made only when necessary.

Before describing the aerial display apparatus of the present embodiment, the principles of the aerial display apparatus will be described.

### [1] Principles of Aerial Display Apparatus

An aerial display apparatus is configured, for example, to form an image of light emitted from a display surface of a liquid crystal display in the air, using an aerial imaging device (mirror device) such as a dihedral corner reflector.

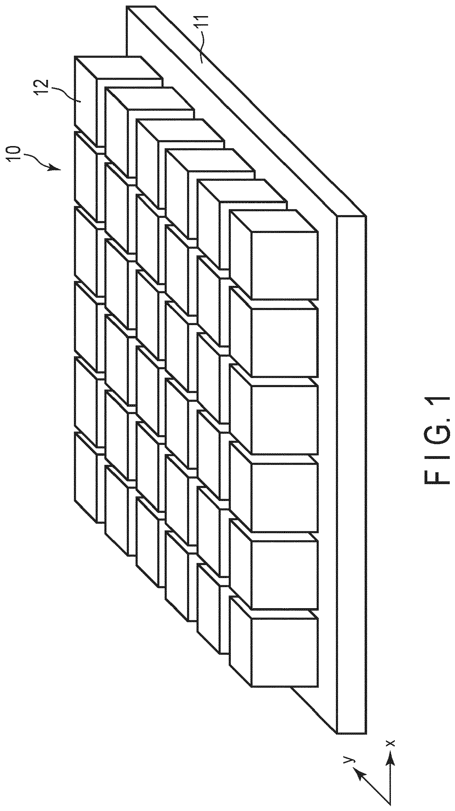

A configuration of a mirror device 10 used in the aerial display apparatus will be described. FIG. 1 is a perspective view of the mirror device 10.

The mirror device 10 includes a planar base material 11 and a plurality of optical elements 12 provided on the base material 11. The optical elements 12 are arranged, for example, in a matrix so as to extend in an x direction and a y direction that are orthogonal to each other. Each of the optical elements 12 has two reflective surfaces that are disposed at right angles. Each optical element 12 is in a cubic or rectangular parallelepiped shape. The base material 11 and the optical elements 12 are configured of a transparent resin.

In FIG. 1, 36 (= 6 × 6) optical elements 12 are shown as an example; however, in actuality, a greater number of optical elements 12 are disposed. The number and size of the optical elements 12 can be freely set according to the specifications of the aerial display apparatus. A distance between two optical elements 12 can be freely set according to the specifications of the aerial display apparatus.

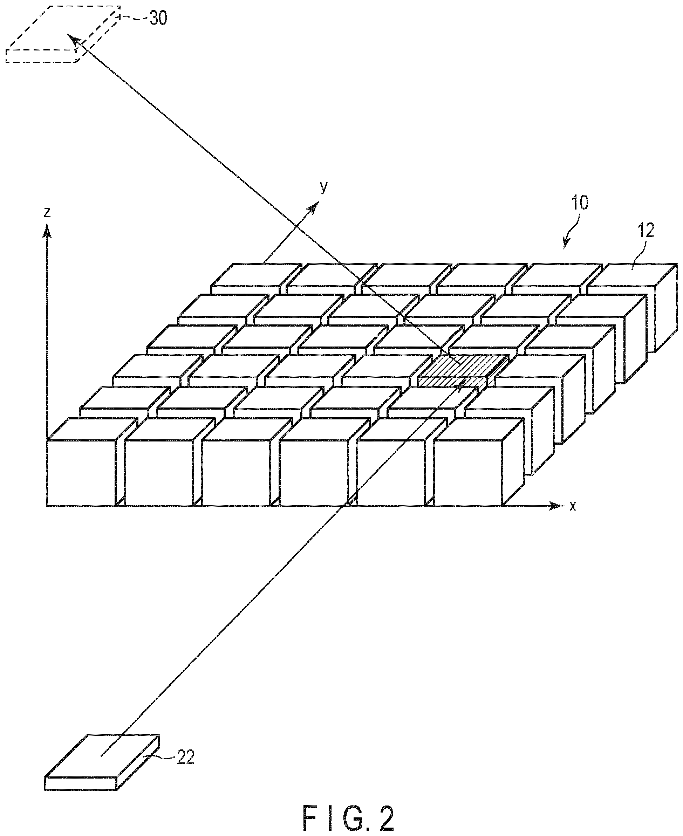

FIG. 2 is a schematic diagram showing principles of the aerial display apparatus. The aerial display apparatus includes a display device 22 that displays an image on a display surface and a mirror device 10. In FIG. 2, the base material 11 of the mirror device 10 is not illustrated, and only the optical elements 12 are extracted for illustration, for ease of understanding of the drawing. The optical elements 12 are arranged on an x-y plane. The z direction is a direction that is orthogonal to the x and y directions, and is a height direction of the optical elements 12.

Light (display light) emitted from the display device 22 is reflected by two side surfaces of each of the optical elements 12. In FIG. 2, the optical path of light that has been reflected by the hatched optical element 12 is extracted for illustration. The light emitted from the display device 22 is formed into an image at a position that is plane-symmetrical to the display device 22 with respect to the mirror device 10, and an aerial image 30 is formed at that position (hereinafter, "display position"). An observer can visually recognize the aerial image 30.

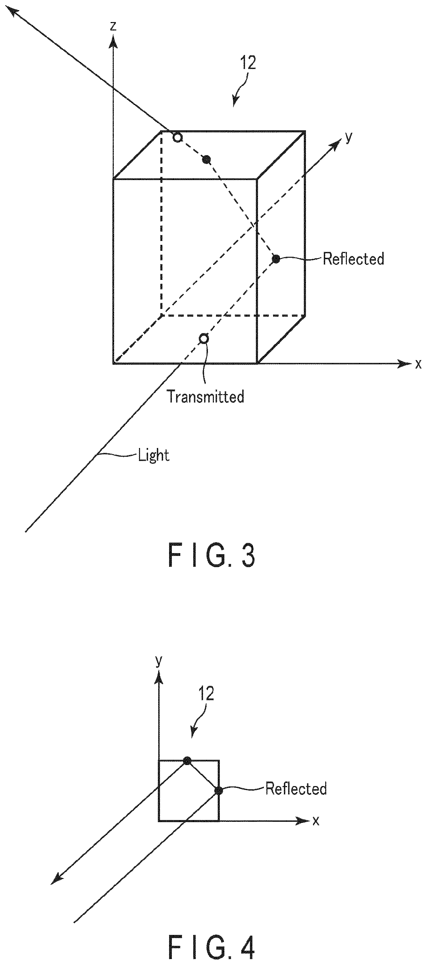

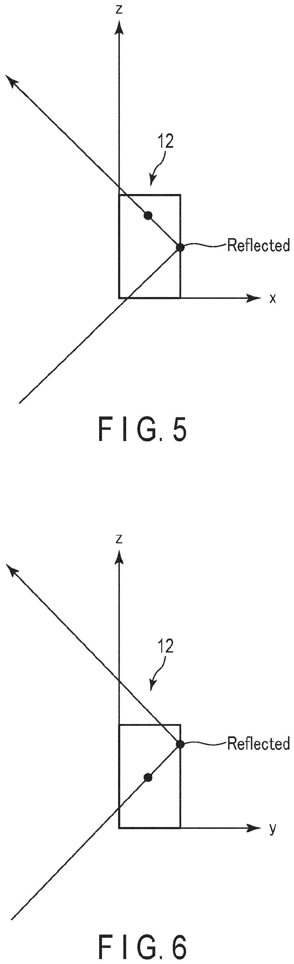

FIG. 3 is a schematic diagram showing a state of light that is reflected twice by a single optical element 12. FIG. 4 is a diagram showing an optical path when the optical element 12 is viewed from the z direction. FIG. 5 is a diagram showing an optical path when the optical element 12 is viewed from the y direction. FIG. 6 is a diagram showing an optical path when the optical element 12 is viewed from the x direction.

Light that has been made incident from a bottom surface of the optical element 12 is reflected by a first side surface, further reflected by a second side surface that is at right angles to the first side surface, and then emitted from a top surface.

It should be noted that not all the light components of light that has been made incident on a given side surface of the optical element 12 are reflected by that side surface, and the light is divided into a reflective component and a transmissive component. The reflective component is a component of light that has been reflected by the side surface at an angle of reflection corresponding to the angle of incidence, and the transmissive component is a component of light that is linearly transmitted through that side surface.

### (Regarding ghosts)

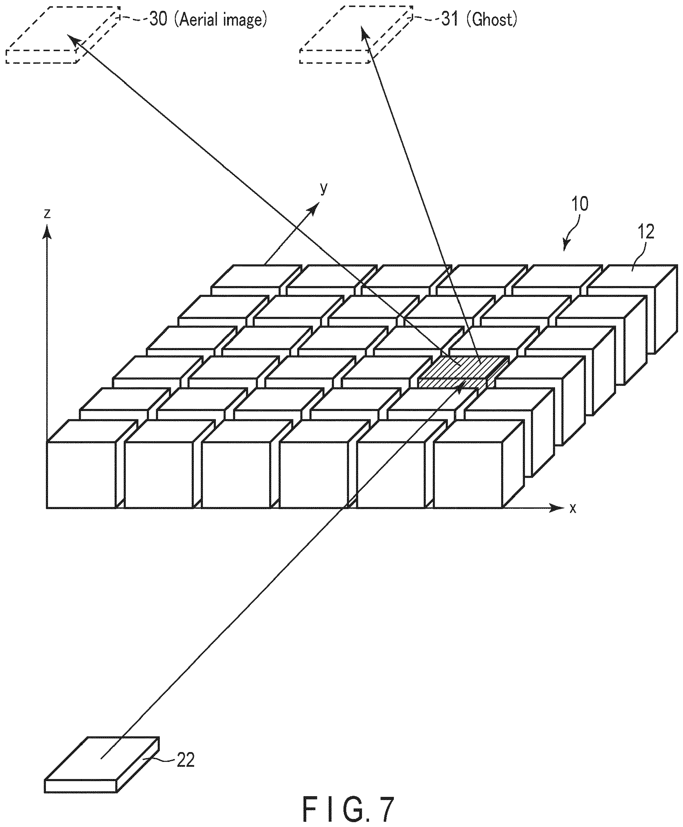

Next, a ghost that is formed at an unintended position will be described. A ghost is a double image that appears in the vicinity of the aerial image 30. FIG. 7 is a schematic diagram showing a ghost 31 displayed by the aerial display apparatus.

The ghost 31 is an image formed by light that is reflected only once (i.e., light that is not reflected twice) by the mirror device 10. The ghost 31 is formed at a position that is not plane-symmetrical to the display device 22 with respect to the mirror device 10.

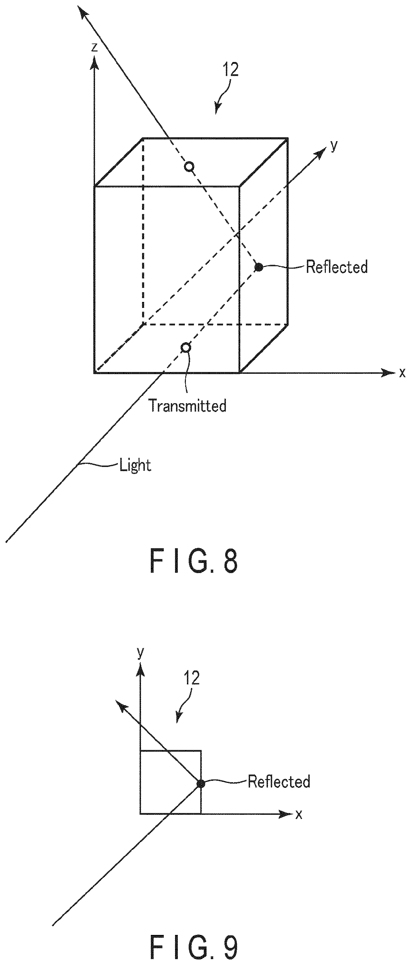

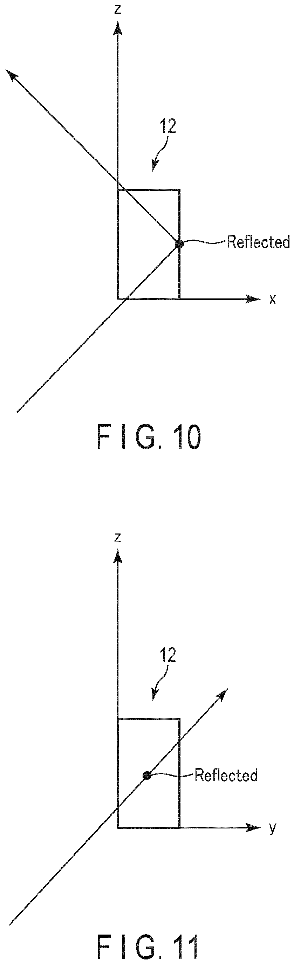

FIG. 8 is a schematic diagram showing a state of light that has been reflected once by a single optical element 12. FIG. 9 is a diagram showing an optical path when the optical element 12 is viewed from the z direction. FIG. 10 is a diagram showing an optical path when the optical element 12 is viewed from the y direction. FIG. 11 is a diagram showing an optical path when the optical element 12 is viewed from the x direction.

Light that has been made incident from a bottom surface of the optical element 12 is reflected by a first side surface, and is then transmitted through a second side surface that is at right angles to the first side surface. The light that travels along this path is formed into an image at a position that is not plane-symmetrical to the display device 22 with respect to the mirror device 10, thereby displaying a ghost 31.

### (Regarding unwanted light)

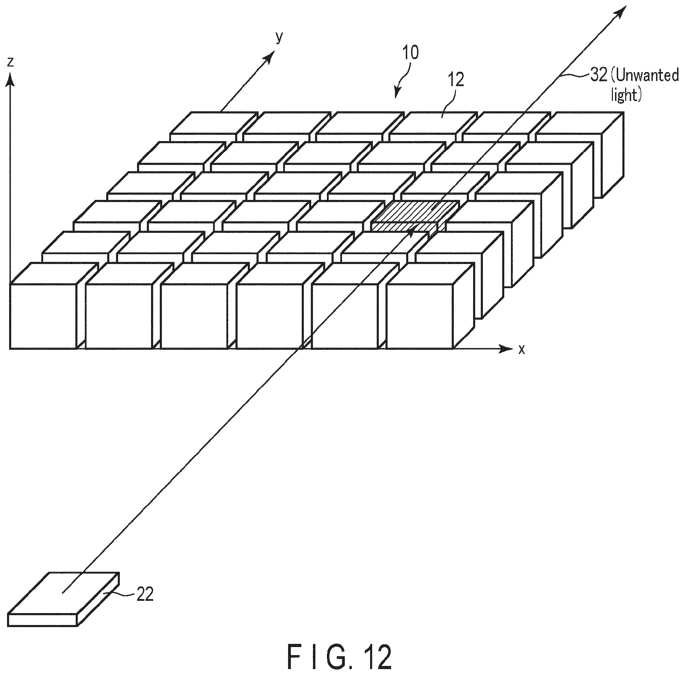

Next, unwanted light will be described. Unwanted light is a light component that does not contribute to formation of a real image. FIG. 12 is a schematic diagram showing unwanted light 32 of the aerial display apparatus.

The unwanted light 32 is light that is not reflected at all by the mirror device 10. The unwanted light 32 is linearly transmitted through the mirror device 10.

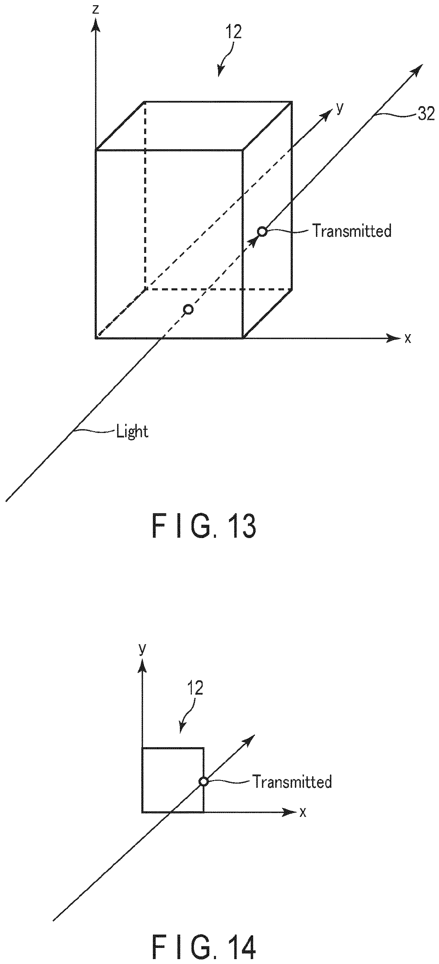

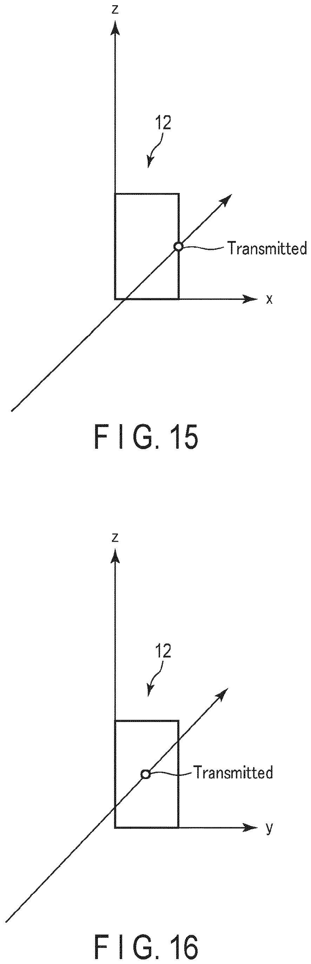

FIG. 13 is a schematic diagram showing a state of light that is not reflected at all by a single optical element 12. FIG. 14 is a diagram showing an optical path when the optical element 12 is viewed from the z direction. FIG. 15 is a diagram showing an optical path when the optical element 12 is viewed from the y direction. FIG. 16 is a diagram showing an optical path when the optical element 12 is viewed from the x direction.

The light that has been made incident from the bottom surface of the optical element 12 is not reflected by the first side surface, and is linearly transmitted through the first side surface.

The unwanted light 32 brightens the periphery of the aerial image 30. Due to the unwanted light 32, the contrast of the aerial image 30 is reduced.

### [2] Aerial Display Apparatus according to Embodiment

Next, an aerial display apparatus according to an embodiment using the above-described principles will be described.

### [2-1] Configuration of Aerial Display Apparatus

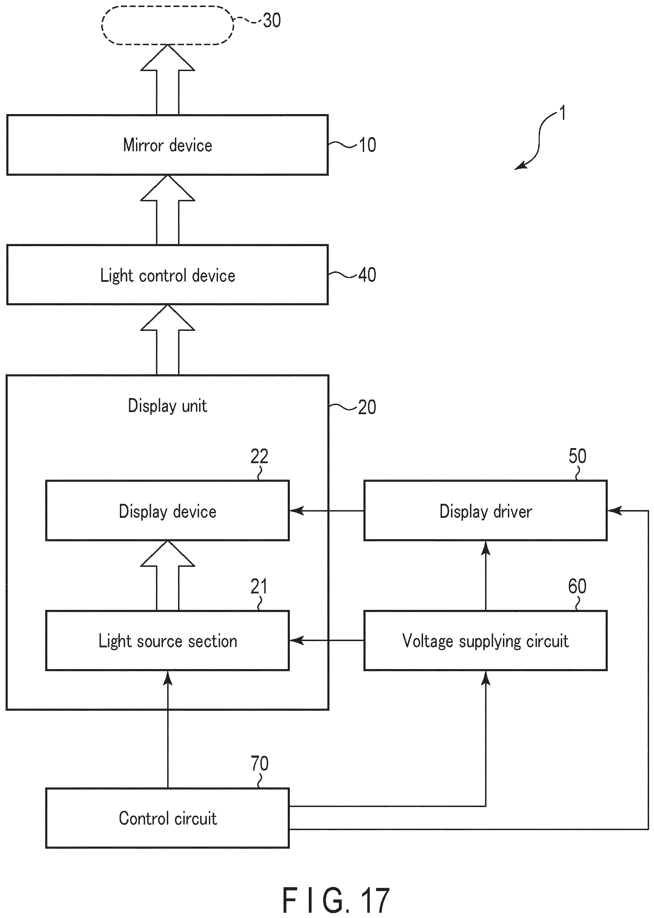

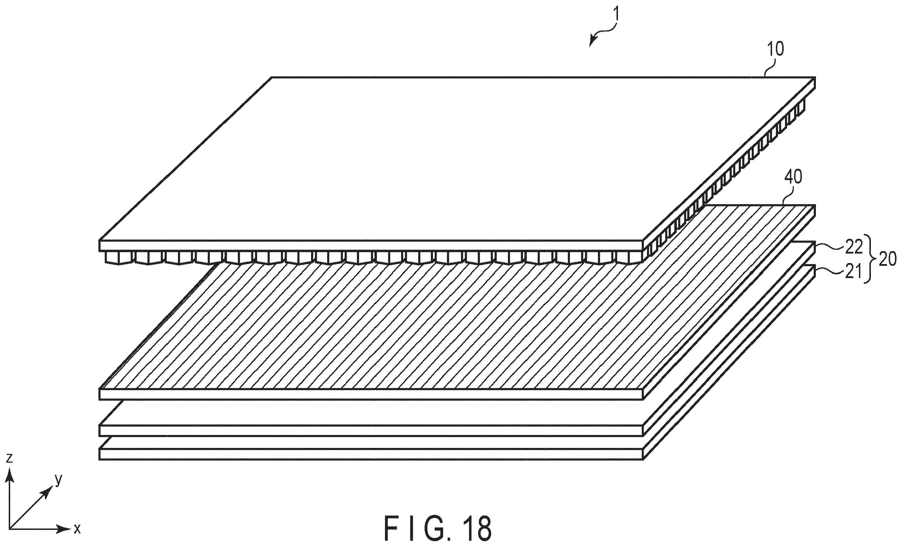

A configuration of the aerial display apparatus 1 of the embodiment will be described with reference to FIGS. 17 and 18. FIG. 17 is a block diagram showing a configuration of an aerial display apparatus 1 according to the embodiment. FIG. 18 is a perspective view showing an optical configuration of the aerial display apparatus 1.

As shown in FIGS. 17 and 18, the aerial display apparatus 1 includes a display unit 20, a light control device 40, a mirror device 10, a display driver 50, a voltage supplying circuit 60, and a control circuit 70. As shown in FIG. 18, the display unit 20, the light control device 40, and the mirror device 10 are disposed in parallel to the x-y plane and arranged in order in the z direction.

The display unit 20 includes a light source section 21 and a display device 22. The light source section 21 includes a planar light source that emits planar light, and applies the planar light to the display device 22. The display device 22 displays an image, a moving image, or the like indicating desired information. The display device 22 allows the light received from the light source section 21 to be transmitted therethrough, and emits light (display light) for displaying an image, a moving image, etc. as an aerial image. Details of the display unit 20 will be described later.

The light control device 40 is disposed on an optical path of the display light emitted from the display unit 20. The light control device 40 is disposed parallel to a display surface of the display device 22 which displays an image, a moving image, or the like or a light emission surface which emits display light. Of the display light emitted from the display device 22, the light control device 40 allows light at a predetermined angle to be transmitted therethrough, and shields light at other angles. Details of the light control device 40 will be described later.

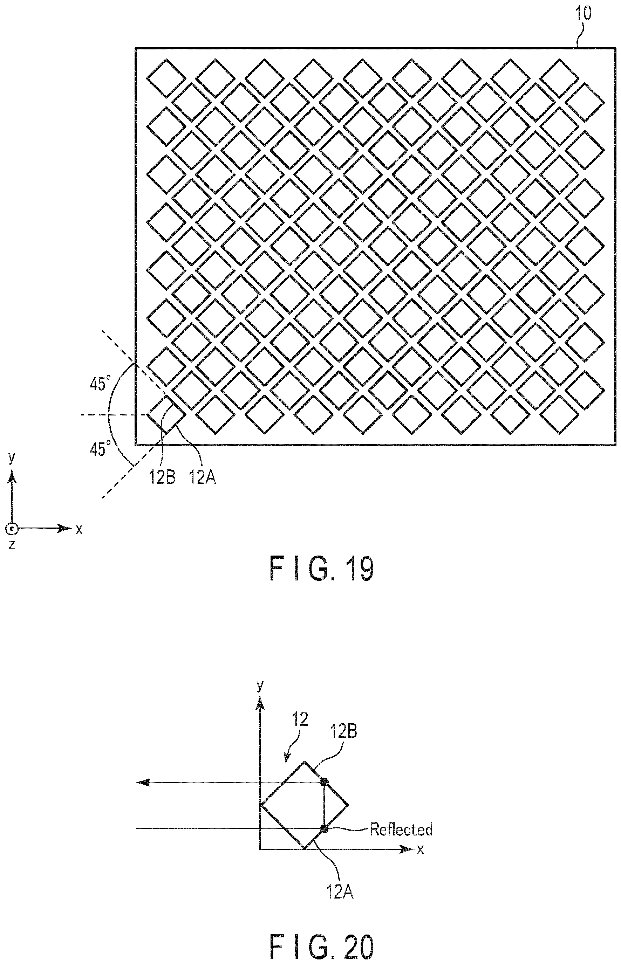

The mirror device 10 is disposed on an optical path of the display light emitted from the light control device 40. The mirror device 10 is disposed in parallel to the display surface of the display device 22. As described above, the mirror device 10 includes a plurality of optical elements 12 provided on the base material 11. FIG. 19 is a diagram showing a layout of a plurality of optical elements 12 on a base material 11, in which the optical elements 12 are viewed from the z direction through the base material 11. Each optical element 12 is in the shape of a cube or a rectangular parallelepiped having diagonal vertexes in the x and y directions, and these cubes or rectangular parallelepipeds are arranged in the x and y directions. In other words, the optical elements 12 shown in FIGS. 1 to 6 are rotated by 45 degrees in a direction parallel to the x-y plane, and the reflective surfaces 12A and 12B of the optical elements 12 are arranged at the angle of 45 degrees with respect to the x direction. FIG. 20 is a diagram showing an optical path when the optical element 12 shown in FIG. 19 is viewed from the z direction. The display light that has been made incident from the bottom surface of the optical element 12 is reflected by the reflective surface 12A, further reflected by the reflective surface 12B that is at right angles to the reflective surface 12A, and emitted from the upper surface. In this manner, the mirror device 10 reflects the display light to form an aerial image 30.

The display driver 50 drives the display device 22 to display an image, a moving image, or the like on the display device 22. The voltage supplying circuit 60 generates voltages required to operate the light source section 21 and the display driver 50, and supplies the generated voltages to the light source section 21 and the display driver 50. The control circuit 70 controls the operation of the entire aerial display apparatus 1. That is, the control circuit 70 controls the light source section 21, the display driver 50, and the voltage supplying circuit 60 to display the aerial image 30 at the display position.

### [2-1-1] Display unit 20

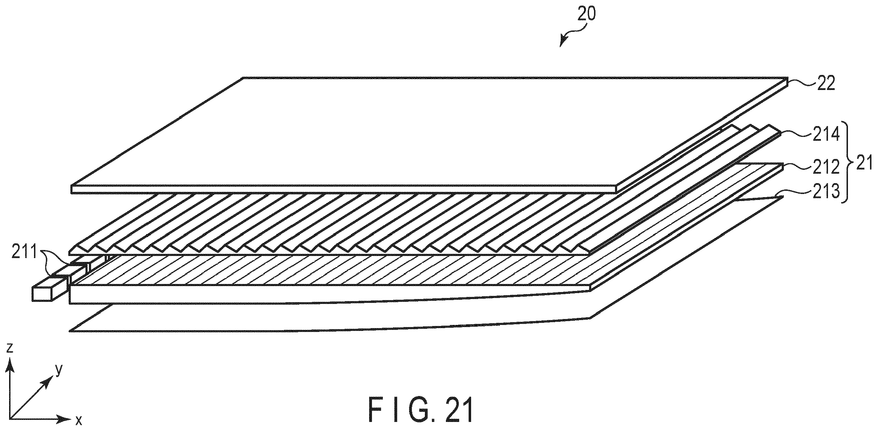

Next, a display unit 20 in the aerial display apparatus 1 will be described with reference to FIG. 21. FIG. 21 is a perspective view showing a configuration of the display unit 20.

As described above, the display unit 20 includes a light source section 21 and a display device 22. The light source section 21 includes a light-emitting device 211, a light guide plate 212, a reflective sheet 213, and an optical sheet 214. The light source section 21 constitutes a surface light source by the light-emitting device 211, the light guide plate 212, the reflective sheet 213, and the optical sheet 214, and emits planar light from the surface light source to the display device 22.

The light source section 21 is configured of a side-light type (edge-light type) backlight. The light-emitting device 211 is disposed on a side surface (or an incident surface) of the light guide plate 212. Light emitted from the light-emitting device 211 is made incident on a side surface of the light guide plate 212. A reflective sheet 213 is provided on a bottom surface of the light guide plate 212. An optical sheet 214 is provided on an upper surface of the light guide plate 212. A display device 22 is disposed on an optical path of the light emitted from the optical sheet 214.

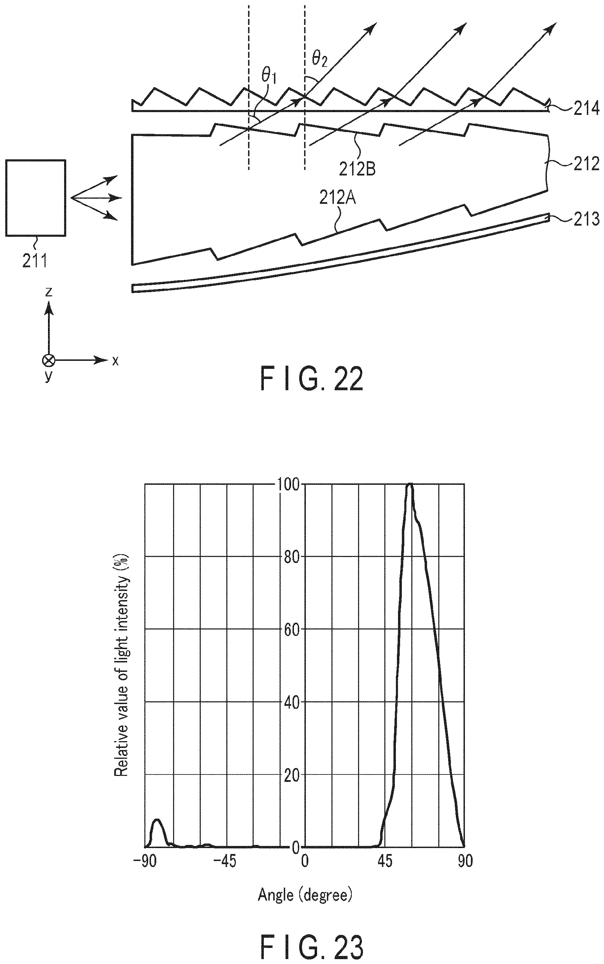

FIG. 22 is a diagram showing how light is emitted from the light source section 21 in the display unit 20. For the light-emitting device 211, one or more light-emitting diodes (LEDs) are used. The light emitting diodes emit, for example, white light.

A bottom surface of the light guide plate 212 functions as a surface that reflects light. The bottom surface of the light guide plate 212 has a plurality of reflective surfaces 212A that are obliquely disposed with respect to the horizontal direction, that is, has a staircase shape (corrugated pattern). The light that has been transmitted through the light guide plate 212 is reflected by the reflective surfaces 212A toward the optical sheet 214.

An upper surface of the light guide plate 212 functions as a surface that refracts light. An upper surface of the light guide plate 212 includes a plurality of refractive surfaces 212B that are obliquely disposed with respect to the horizontal direction, that is, has a staircase shape (corrugated pattern). The direction of inclination of the refractive surface 212B is opposite to the direction of inclination of the reflective surface 212A. The light emitted from the upper surface of the light guide plate 212 is refracted by the refractive surfaces 212B.

The light emitted from the upper surface of the light guide plate 212 has an angle θ₁ with respect to the z direction, as shown in FIG. 22. The angle θ₁ of the emission light is, for example, 60 degrees. The reflective sheet 213 reflects the light emitted from the bottom surface of the light guide plate 212, and returns the light to the light guide plate 212.

The optical sheet 214 is configured of a prism sheet. That is, the optical sheet 214 is configured in such a manner that a plurality of prisms with a triangular cross-sectional shape are aligned in a single direction. The optical sheet 214 refracts the light that has been made incident from the light guide plate 212, and emits light at an angle θ₂ with respect to the z direction, as shown in FIG. 22. The angle θ₂ of the emission light is, for example, 45 degrees.

As described above, the light emitted from the light-emitting device 211 becomes light in a predetermined direction (e.g., at the output angle of 45 degrees) by the light guide plate 212, the optical sheet 214, and the reflective sheet 213, and is emitted from the optical sheet 214.

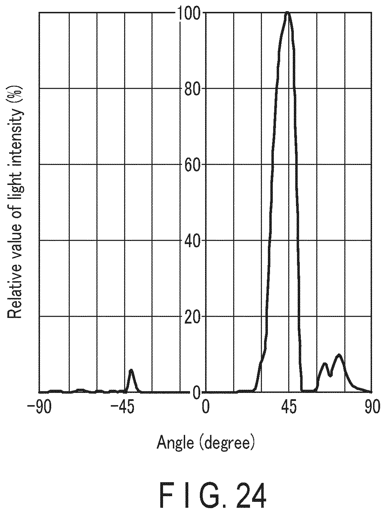

FIG. 23 is a diagram showing the light intensity of light emitted from the light guide plate 212, which varies according to the angle of emission. As can be seen from FIG. 23, the light emitted from the light guide plate 212 has the maximum light intensity at the angle of 60 degrees (angle θ₁) with respect to the z direction, and the angle of the emission light falls within the range of 45 to 90 degrees with respect to the z direction. FIG. 24 is a diagram showing the light intensity of light emitted from the optical sheet 214, which varies according to the angle of emission. As can be seen from FIG. 24, the light emitted from the optical sheet 214 has the maximum light intensity at the angle of 45 degrees (angle θ₂) with respect to the z direction, and the angle of the emission light falls within the range of 30 to 60 degrees with respect to the z direction.

The light emitted from the optical sheet 214 enters the display device 22 at an angle θ₂ with respect to the z direction. The display device 22 displays an image, a moving image, etc. by using the light from the light source section 21. The display device 22 allows the light received from the light source section 21 to be transmitted therethrough, and emits display light for displaying an image, a moving image, etc. at a display position in the air. That is, the display device 22 receives light from the light source section 21, and emits light that has been modulated by an image, a moving image, etc.

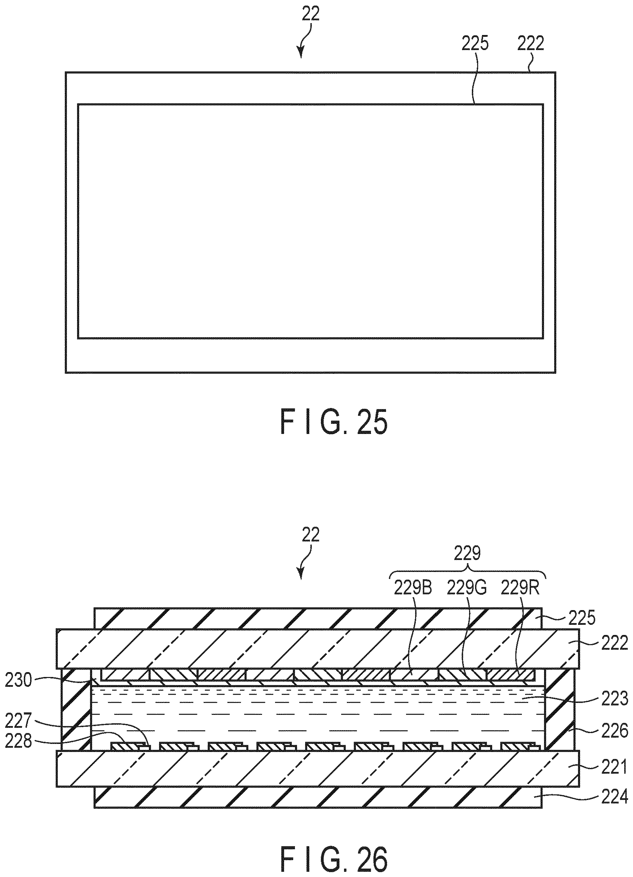

The display device 22 is configured of, for example, a liquid crystal display device. An example of the liquid crystal display device will be described below. FIG. 25 is a plan view of a liquid crystal display device as the display device 22, and FIG. 26 is a cross-sectional view of the liquid crystal display device.

The display device 22 includes a TFT substrate 221 on which Thin Film Transistors (TFTs), pixel electrodes, and the like are formed, a Color Filter (CF) substrate 222 on which a color filter, a common electrode, and the like are formed and which is disposed to face the TFT substrate 221, and a liquid crystal layer 223 interposed between the TFT substrate 221 and the CF substrate 222.

Each of the TFT substrate 221 and the CF substrate 222 is configured of a transparent substrate (e.g., a glass substrate). A polarizing plate 224 is disposed on a surface of the TFT substrate 221 that is opposite to the surface on which the liquid crystal layer 223 is present. Furthermore, a polarizing plate 225 is disposed on a surface of the CF substrate 222 that is opposite to the surface on which the liquid crystal layer 223 is present.

The TFT substrate 221 is disposed so as to face the light source section 21. Illumination light that has been emitted from the light source section 21 enters the liquid crystal display device from the side of the TFT substrate 221. The surface of the CF substrate 222 that is opposite to a surface on which the light source section 21 is disposed is a display surface or a light emission surface of the liquid crystal display device.

The TFT substrate 221 and the CF substrate 222 are attached to each other by a seal member 226, with a space kept therebetween. A liquid crystal material is sealed in a space surrounded by the TFT substrate 221, the CF substrate 222, and the seal member 226 to form a liquid crystal layer 223.

In the liquid crystal material contained in the liquid crystal layer 223, the alignment of the liquid crystal molecules is operated in accordance with an electric field applied between the TFT substrate 221 and the CF substrate 222, resulting in a change in optical characteristics. The liquid crystal layer 23 is configured of a liquid crystal layer including liquid crystal molecules having dielectric anisotropies, and is configured of, for example, nematic liquid crystals. Liquid crystal molecules of nematic liquid crystals are electrically polarized in response to an external electric field. Examples of the liquid crystal mode that may be used include a vertical alignment (VA) mode; however, other liquid crystal modes such as a twisted nematic (TN) mode and a homogeneous mode may be used, as a matter of course.

A plurality of switching elements, such as the above-described thin-film transistors (TFTs) 227 are provided on the side of the liquid crystal layer 223 of the TFT substrate 221. The TFT 227 includes a gate electrode electrically connected to the scanning line GL, a gate insulating film provided on the gate electrode, a semiconductor layer (for example, an amorphous silicon layer) provided on the gate insulating film, and a source electrode and a drain electrode separately provided on the semiconductor layer. The source electrode is electrically connected to the signal line SL. An insulating layer (not shown) is provided on the TFT 227. A plurality of pixel electrodes 228 are provided on the insulating layer.

A color filter 229 is provided on the side of the liquid crystal layer 223 of the CF substrate 222. The color filter 229 includes a plurality of coloring filters (coloring members). Specifically, a plurality of red filters 229R, a plurality of green filters 229G, and a plurality of blue filters 229B are provided. A general color filter is configured of red (R), green (G), and blue (B), which are the three primary colors of light. A set of three adjacent colors, R, G, and B constitutes a display unit (pixel), and a single-color portion of any one of R, G, and B in a single pixel constitutes the minimal driving unit called a "sub-pixel". The TFT 227 and the pixel electrode 228 are provided for each sub-pixel. In the description that follows, a sub-pixel is referred to as a "pixel" unless it is particularly necessary to distinguish between a pixel and a sub-pixel.

A black matrix (light-shielding film) (not shown) for shielding light is provided at a boundary portion of the red filter 229R, the green filter 229G, and the blue filter 229B, and a boundary portion of the pixels (sub-pixels). That is, the black matrix is formed in a mesh pattern. The black matrix is provided, for example, to shield unwanted light between coloring members and to improve the contrast.

A common electrode 230 is provided on the color filter 229 and the black matrix. The common electrode 230 is formed in a planar shape over the entire display region of the liquid crystal display device.

The polarizing plates 224 and 225 are provided so as to interpose the TFT substrate 221 and the CF substrate 222. Each of the polarizing plates 224 and 225 is configured of a linear polarizer and a 1/4-wavelength plate.

The pixel electrode 228 and the common electrode 230 are formed of transparent electrodes using, for example, indium tin oxides (ITO).

### [2-1-2] Light control device 40

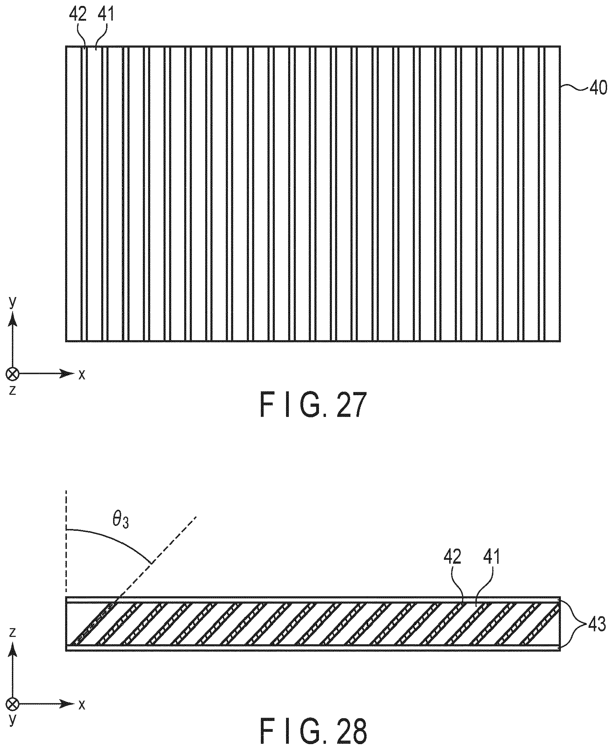

Next, a light control device 40 in the aerial display apparatus 1 will be described with reference to FIGS. 27 and 28. FIG. 27 is a plan view of the light control device 40, and FIG. 28 is a cross-sectional view of the light control device 40 taken along the x direction.

As shown in FIGS. 27 and 28, the light control device 40 includes a plurality of transparent regions 41, a plurality of light-shielding regions 42, and two base materials 43. The transparent regions 41 and the light-shielding regions 42 have a linear shape extending in the y direction, and are arranged in an alternating manner in the x direction. That is, the transparent regions 41 and the light-shielding regions 42 are arranged in stripes in the x direction. In the x direction, the width of the transparent region 41 is smaller than the width of the light-shielding region 42.

The transparent regions 41 and the light-shielding regions 42 are disposed at an inclination of angle θ₃ with respect to the z direction perpendicular to the light emission surface (or the principal surface) of the light control device 40. The angle θ₃ satisfies, for example, 0 < θ₃ ≤ 60 degrees (greater than 0 degrees and equal to or smaller than 60 degrees), and preferably satisfies 30 ≤ θ₃ ≤ 60 degrees (equal to or greater than 30 degrees and equal to or smaller than 60 degrees). The transparent region 41 includes an optical path that allows the display light emitted from the display unit 20 to be transmitted therethrough, and an angle θ₃ formed between the optical path and the z direction satisfies 0 < θ₃ ≤ 60 degrees (greater than 0 degrees and equal to or smaller than 60 degrees), and preferably satisfies 30 ≤ θ₃ ≤ 60 degrees (equal to or greater than 30 degrees and equal to or smaller than 60 degrees).

Here, a case will be described, as an example, where both the angle θ₃ of the transparent region 41 and the angle θ₃ of the light-shielding region 42 with respect to the z direction are 45 degrees. The angle θ₃ of the emission light in the light control device 40 is made to match the angle θ₂ of the emission light from the optical sheet 214 (or the display unit 20). Thereby, it is possible to improve the light utilization efficiency of the emission light emitted from the optical sheet 214.

The two base materials 43 are provided to interpose the transparent region 41 and the light-shielding region 42 therebetween. The transparent regions 41 and the base material 43 are configured of, for example, transparent resins. The light-shielding regions 42 are configured of, for example, a resin mixed with a black dye.

Of the light emitted from the display unit 20, mainly the transparent regions 41 of the light control device 40 allow light at an angle θ₂ (= θ₃) with respect to the z direction to be transmitted therethrough, and the light-shielding region 42 shields light at other angles.

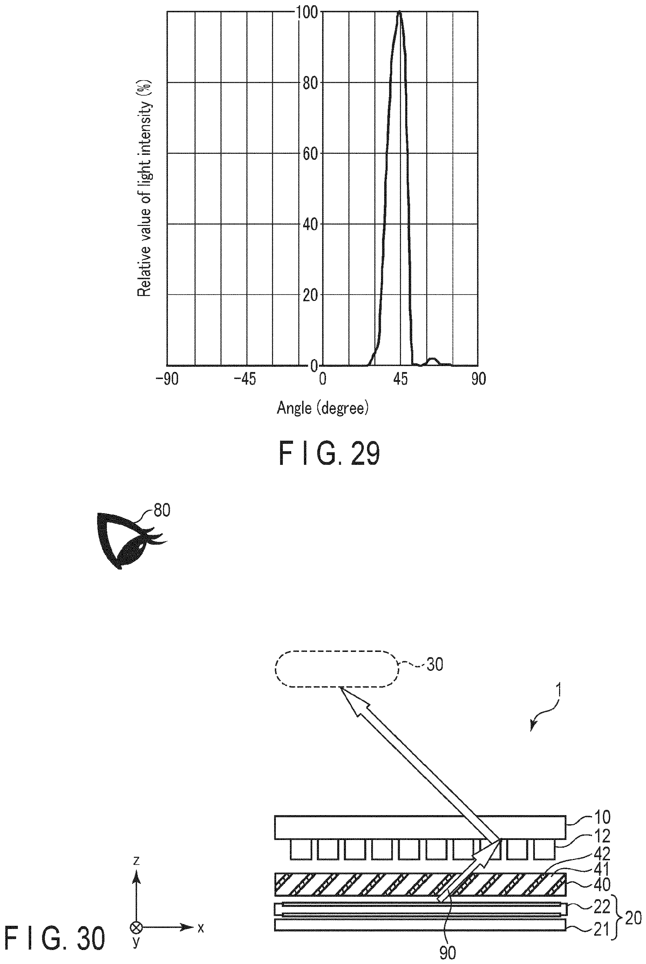

FIG. 29 is a diagram showing light intensity according to an angle of emission of light emitted from the light control device 40. As can be seen from FIG. 29, the light emitted from the light control device 40 has the maximum light intensity at the angle of 45 degrees (angle θ₃) with respect to the z direction, and the angle of the emitted light falls within the range of 30 to 60 degrees with respect to the z direction.

### [2-2] Display Operation of Aerial Display Apparatus 1

Next, a display operation of the aerial display apparatus according to an embodiment will be described with reference to FIG. 30. FIG. 30 is a schematic diagram showing an optical configuration of the aerial display apparatus 1.

Light at an angle θ₂ (e.g., θ₂ = 45 degrees) with respect to the z direction is emitted from the display unit 20 mainly to the light control device 40. Of the light that has been made incident on the light control device 40, only light 90 at an angle θ₃ (e.g., θ₃ = 45 degrees) with respect to the z direction is transmitted through the transparent region 41. In this embodiment, there is little light at angles other than the angle θ₂, and such light is shielded by the light-shielding regions 42.

The light 90 that has been transmitted through the light control device 40 is made incident on the mirror device 10. The light 90 that has been made incident on the mirror device 10 is reflected by the reflective surfaces 12A and 12B of the optical element 12 included in the mirror device 10, as described with reference to FIGS. 1 to 6. The light that has been reflected by the optical elements 12 is formed into an aerial image 30 at the display position. That is, the light emitted from the display device 22 is formed into an image at a display position that is plane-symmetrical to the image displayed on the display device 22 with respect to the mirror device 10, and the aerial image 30 is displayed at the display position. An observer 80 is capable of visually recognizing this aerial image 30.

### [3] Aerial Display Apparatus according to Modification

Next, an aerial display apparatus according to a modification will be described. In the aerial display apparatus 1 of the above-described embodiment, a configuration of emitting light at the angle θ₂ with respect to the z direction is used for the light source section 21; however, this modification uses a configuration for diffusing and emitting light for the light source section. Hereinafter, optical configurations of a display unit including a light source section and an aerial display apparatus according to a modification will be described. Other configurations are the same as those of the above-described embodiment.

### [3-1] Display Unit 20A

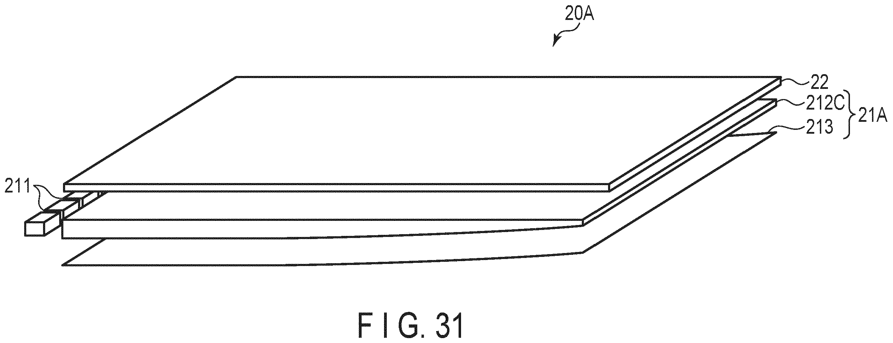

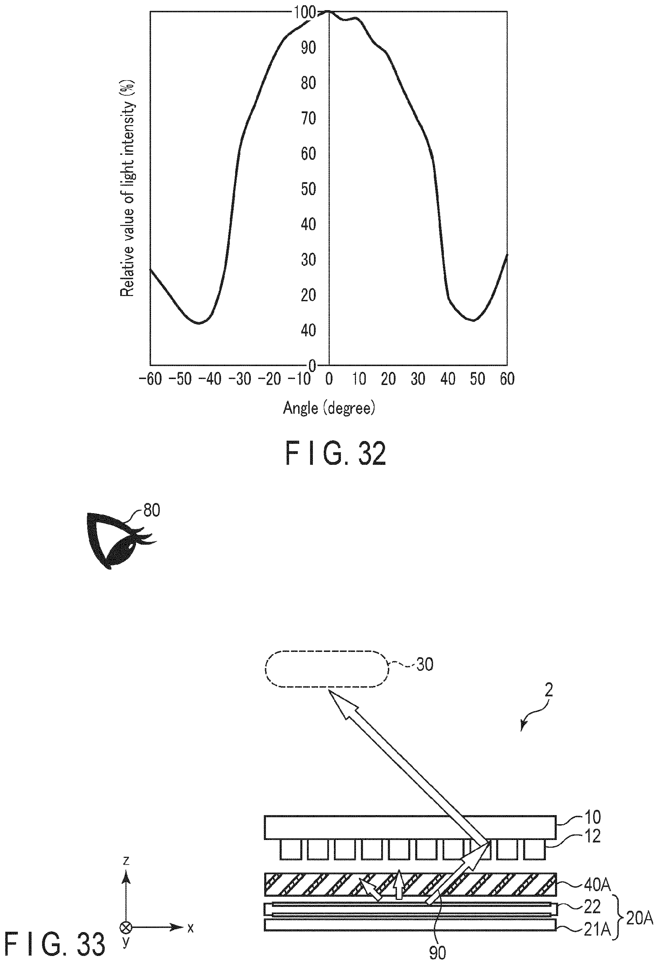

A display unit 20A in an aerial display apparatus 2 according to a modification not according to the claimed invention will be described with reference to FIGS. 31 and 32. FIG. 31 is a perspective view showing a configuration of the display unit 20A. FIG. 32 is a diagram showing the light intensity of light emitted from the light guide plate 212C, which varies according to the angle of emission.

The display unit 20A includes a light source section 21A and a display device 22. The light source section 21A includes a light-emitting device 211, a light guide plate 212C, and a reflective sheet 213. The light source section 21A constitutes a surface light source by the light-emitting device 211, the light guide plate 212C, and the reflective sheet 213, and emits planar light from the surface light source to the display device 22.

The light-emitting device 211 is disposed on a side surface (or an incident surface) of the light guide plate 212C. Light emitted from the light-emitting device 211 is made incident on a side surface of the light guide plate 212. A reflective sheet 213 is provided on a bottom surface of the light guide plate 212C. A display device 22 is disposed on an optical path of light emitted from the light guide plate 212C. A diffusion plate may be provided, as necessary, between the light guide plate 212C and the display device 22.

The light emitted from the light-emitting device 211 is made incident on the light guide plate 212C. The light guide plate 212C guides light emitted from the light-emitting device 211, reflects the light on the bottom surface, and emits the reflected light from the top surface. In this modification, the light as shown in FIG. 32 is emitted from the top surface of the light guide plate 212C. The light emitted from the light guide plate 212C has a maximum light intensity in the z direction, and has a light intensity equal to or greater than 60% with respect to the maximum light intensity, within the range of ± 30 degrees with respect to the z direction.

### [3-2] Display Operation of Aerial Display Apparatus 2

Next, a display operation of the aerial display apparatus 2 according to the modification not according to the invention will be described, with reference to FIG. 33. FIG. 33 is a schematic diagram showing an optical configuration of the aerial display apparatus 2. In this modification, a light control device 40A obtained by setting the angle θ₃ of the light control device shown in FIG. 27 to 30 degrees is used, in consideration of the light intensity of the light emitted from the light guide plate 212C shown in FIG. 32, which varies according to the angle of emission.

The light emitted from the display unit 20A is made incident on the light control device 40A. Of the light that has been made incident on the light control device 40A, only light 90 at an angle θ₃ (e.g., θ₃ = 30 degrees) with respect to the z direction is transmitted through the transparent region 41. On the other hand, light at angles other than the angle θ₃ is shielded by the light-shielding region 42.

The light 90 that has been transmitted through the light control device 40A is made incident on the mirror device 10. The light 90 that has been made incident on the mirror device 10 is reflected by the optical elements 12 included in the mirror device 10, as described with reference to FIGS. 1 to 6. The light that has been reflected by the optical elements 12 is formed into an aerial image 30 at the display position. That is, the light emitted from the display device 22 is formed into an image at a display position that is plane-symmetrical to the image displayed on the display device 22 with respect to the mirror device 10, and the aerial image 30 is displayed at the display position. An observer 80 is capable of visually recognizing this aerial image 30.

### [4] Aerial Display Apparatus according to Another Modification

Next, an aerial display apparatus according to another modification will be described. In the aerial display apparatus 1 of the embodiment shown in FIG. 30, the light emitted from the display device 22 is made incident on the mirror device 10, and the aerial image 30 is formed by the light that has been reflected by the mirror device 10. That is, the light emitted from the display device 22 is formed into an image at a display position that is plane-symmetrical to the image displayed on the display device 22 with respect to the mirror device 10, and the aerial image 30 is generated. This allows the observer 80 to observe, with the aerial display apparatus 1, the aerial image 30 obliquely with respect to the light emission surface of the mirror device 10 (or the z direction).

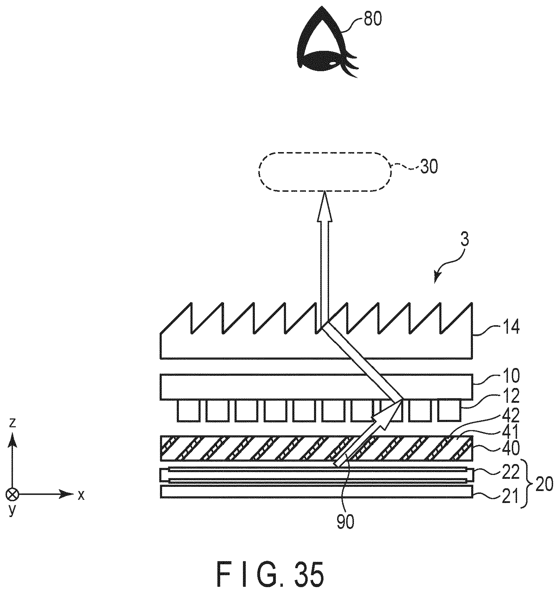

In another modification, the optical path of light that has been reflected by the mirror device 10 is changed by an optical path changing device to generate the aerial image 30. An optical configuration of an aerial display apparatus 3 according to another modification and a display operation thereof will be described, with reference to FIG. 35. FIG. 35 is a schematic diagram showing an optical configuration of an aerial display apparatus 3 according to another modification.

An optical path changing device 14 is disposed on an optical path of light that has been reflected by the mirror device 10. In other words, an optical path changing device 14 is disposed between the mirror device 10 and the observer 80 (or the aerial image 30). The optical path changing device 14 is, for example, a transparent structure with a saw-tooth cross-sectional shape, as shown in FIG. 35. The light that has been made incident on each of the surfaces constituting the saw-tooth shape of the optical path changing device 14 is changed in its emission direction by the refraction effect. Other configurations are the same as those of the embodiment shown in FIG. 30.

As in the embodiment shown in FIG. 30, the light emitted from the display unit 20 is transmitted through the light control device 40, and is made incident on the mirror device 10. The light 90 that has been made incident on the mirror device 10 is reflected by the optical element 12 included in the mirror device 10.

The light that has been reflected by the optical element 12 is changed in its optical path by an optical path changing device 14, and becomes light that travels mainly along the z direction. In other words, the light that has been reflected by the optical element 12 is refracted by the optical path changing device 14, and is emitted mainly in a direction that is orthogonal to the light emission surface of the mirror device 10 (or an xy plane that is parallel to the x and y directions). Here, a case is shown, as an example, where the optical path of the light that has been reflected by the optical element 12 is changed in the z direction; however, the optical path may be changed in other directions, for example, at 15 degrees or 30 degrees with respect to the z direction.

The light whose optical path has been changed by the optical path changing device 14 is formed into an aerial image 30 at the display position. In this manner, the aerial display apparatus 3 is capable of generating an aerial image centered on the z direction, i.e., forming an aerial image 30 centered on a direction that is orthogonal to the light exit surface of the mirror device 10 (or the aerial display apparatus 3). This allows the observer 80 to observe, with the aerial display apparatus 3, the aerial image 30 with a favorable display quality from a direction that is orthogonal to the light emission surface of the mirror device 10, or from the z direction.

### [5] Effects of Embodiment and Its Modifications

According to the embodiment, its modification, and another modification, it is possible to provide an aerial display apparatus capable of achieving miniaturization, while ensuring the display quality of an aerial image.

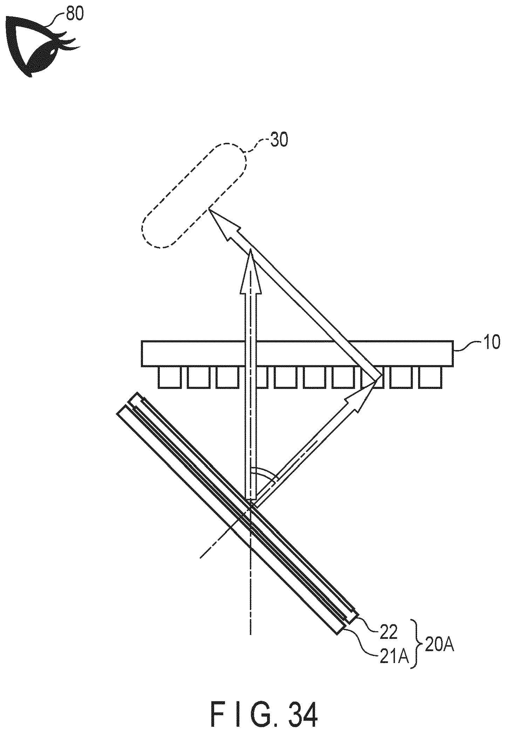

Before describing the effects of the embodiment, its modification and another modification in detail, an aerial display apparatus according to a comparative example will be described below. FIG. 34 is a schematic diagram showing an optical configuration of an aerial display apparatus according to a comparative example not according to the claimed invention. A display unit 20A included in the comparative example does not have a configuration of emitting light at an angle θ₂, which the display unit 20 of the embodiment has. In the comparative example, the display unit 20A is installed to be greatly inclined with respect to the mirror device 10. The mirror device 10 has a structure of not only reflecting the light that has been emitted from the display unit 20A but also allowing the light to be transmitted therethrough. Thereby, by installing the display unit 20A to be inclined with respect to the mirror device 10, as shown in FIG. 34, the light emitted from the display unit 20A is prevented from being transmitted through the mirror device 10 and directly reaching the observer 80.

In this manner, in the comparative example, since the display unit 20A is installed so as to be greatly inclined with respect to the mirror device 10, a large installation area is required as the display apparatus, thus decreasing the flexibility in installing the display apparatus. That is, installation conditions of members constituting the display apparatus are limited. Moreover, in the comparative example, light in a direction perpendicular to the display surface of the display unit 20A is reflected by the optical elements 12 of the mirror device 10, thereby being formed into an aerial image 30. However, light that is oblique to the display surface of the display unit 20A is transmitted through the optical element 12 of the mirror device 10 and reaches the vicinity of the aerial image 30, thereby degrading the display quality.

In the aerial display apparatus according to the embodiment, its modification, and another modification, the display unit 20 (or 20A) need not be installed so as to be inclined with respect to the mirror device 10, and the display unit is installed so as to be parallel to the mirror device 10. Moreover, a light control device 40 (or 40A) is disposed between the display unit and the mirror device 10. Thereby, of the light emitted from the display unit, light that has been transmitted through the light control device is formed into an image at a position that is plane-symmetrical to the display unit with respect to the mirror device 10, and the aerial image 30 is displayed at that position. On the other hand, of the light emitted from the display unit, since unwanted light and stray light are shielded by the light control device, it is possible to prevent such light from reaching the vicinity of the aerial image 30 and the observer 80.

As described above, according to the embodiment, its modification, and another modification, it is possible to achieve miniaturization of the aerial display apparatus while ensuring the display quality of the aerial image 30. That is, it is possible to provide an aerial display apparatus capable of improving the flexibility of installation conditions of the constituent members (such as the display unit, the light control device, and the mirror device) and achieving compact packaging, while ensuring the display quality of the aerial image.

Furthermore, in the embodiment, the angle θ₃ of the emission light in the light control device 40 is made to match the angle θ₂ of the emission light from the optical sheet 214 (or the display unit 20). Thereby, it is possible to improve the light utilization efficiency of the emission light emitted from the display unit 20.

According to another modification, an aerial image 30 can be formed centering on a direction that is orthogonal to the light emission surface of the aerial display apparatus 3. It is thereby possible for the observer 80 to visually recognize the aerial image 30 with a favorable display quality.

### [6] Other Modifications

While certain embodiments of the present invention have been described, these embodiments have been presented by way of example only, and are not intended to limit the scope of the inventions. Indeed, the novel embodiments described herein may be embodied in a variety of other forms.

## Claims

1. An aerial display apparatus (3) comprising:
a display device (22) which includes a display surface on which an image is displayed, and which emits display light from the display surface;
a light control device (40) which includes a plurality of transparent regions (41) and a plurality of light-shielding regions (42) that are arranged in an alternating manner and are obliquely disposed with respect to a first direction that is orthogonal to the display surface, and which allows the display light (90) that has been made incident on the transparent region (41) to be transmitted therethrough, and shields the display light that has been made incident on the light-shielding region (42);
a mirror device (10) which is disposed in parallel to the display surface, and which reflects the display light that has been transmitted through the light control device; and
an optical path changing device (14) which changes an optical path of the display light that has been reflected by the mirror device,
wherein the transparent regions and the light-shielding regions extend in a second direction that is parallel to the display surface, and are disposed in a third direction that is orthogonal to the second direction,
wherein the transparent regions (41) and the light-shielding regions (42) are arranged at an angle θ which is greater than 0 degrees and equal to or smaller than 60 degrees with respect to the first direction, and
wherein the display light emitted from the display device has a maximum light intensity at the angle θ.

2. The aerial display apparatus according to claim 1, wherein the optical path changing device is configured to emit the display light that has been made incident at a first angle with respect to the first direction at a second angle with respect to the first direction.

3. The aerial display apparatus according to claim 1, further comprising:
a light source section which emits illumination light to the display device,
the light source section emitting light that has a maximum light intensity at the angle θ to the display device.

## Patentansprüche

1. Ein Luftanzeigegerät (3), mit:
einer Anzeigeeinrichtung (22), die eine Anzeigeoberfläche umfasst, auf der ein Bild angezeigt wird, und die ein Anzeigelicht von der Anzeigeoberfläche ausstrahlt;
einer Lichtsteuereinrichtung (40), die eine Mehrzahl von transparenten Bereichen (41) und eine Mehrzahl von lichtabschirmenden Bereichen (42) umfasst, die abwechselnd angeordnet sind und in Bezug auf eine erste Richtung, die orthogonal zu der Anzeigeoberfläche ist, schräg angeordnet sind, und die es ermöglicht, dass das Anzeigelicht (90), das auf den transparenten Bereich (41) einfällt, durch diesen hindurchgelassen wird, und die das Anzeigelicht, das auf den lichtabschirmenden Bereich (42) einfällt, abschirmt;
einer parallel zur Anzeigeoberfläche angeordneten Spiegeleinrichtung (10), die das durch die Lichtsteuereinrichtung hindurchgelassene Anzeigelicht reflektiert; und
einer Einrichtung (14) zur Änderung des optischen Weges, die den optischen Weg des von der Spiegeleinrichtung reflektierten Anzeigelichts ändert,
wobei sich die transparenten Bereiche und die lichtabschirmenden Bereiche in einer zweiten Richtung erstrecken, die parallel zu der Anzeigeoberfläche ist, und in einer dritten Richtung angeordnet sind, die orthogonal zu der zweiten Richtung ist,
wobei die transparenten Bereiche (41) und die lichtabschirmenden Bereiche (42) in einem Winkel θ in Bezug auf die erste Richtung angeordnet sind, der größer als 0 Grad und gleich oder kleiner als 60 Grad ist, und
wobei das von der Anzeigeeinrichtung ausgestrahlte Anzeigelicht eine maximale Lichtintensität bei dem Winkel θ aufweist.

2. Das Luftanzeigegerät nach Anspruch 1, wobei die Einrichtung zur Änderung des optischen Weges eingerichtet ist, um das Anzeigelicht, das in einem ersten Winkel in Bezug auf die erste Richtung einfällt, in einem zweiten Winkel in Bezug auf die erste Richtung zu emittieren.

3. Das Luftanzeigegerät nach Anspruch 1, ferner mit:
einer Lichtquelleneinheit, die Beleuchtungslicht an die Anzeigeeinrichtung abgibt,
wobei die Lichtquelleneinheit Licht ausstrahlt, das bei dem Winkel θ zu der Anzeigeeinrichtung eine maximale Lichtintensität aufweist.

## Revendications

1. Appareil d'affichage aérien (3) comprenant :
un dispositif d'affichage (22) qui comprend une surface d'affichage sur laquelle une image est affichée, et qui émet une lumière d'affichage à partir de la surface d'affichage ;
un dispositif de commande de lumière (40) qui comprend une pluralité de zones transparentes (41) et une pluralité de zones de protection contre la lumière (42) qui sont disposées de façon alternée et sont disposées obliquement par rapport à une première direction qui est orthogonale à la surface d'affichage, et qui permet à la lumière d'affichage (90) qui a été rendue incidente sur la zone transparente (41) d'être transmise à travers celle-ci, et qui protège la lumière d'affichage qui a été rendue incidente sur la zone de protection contre la lumière (42) ;
un dispositif de miroir (10) disposé parallèlement à la surface d'affichage et qui réfléchit la lumière d'affichage transmise par le dispositif de commande de lumière ; et
un dispositif de modification du trajet optique (14) qui modifie un trajet optique de la lumière d'affichage qui a été réfléchie par le dispositif de miroir,
dans lequel les zones transparentes et les zones de protection contre la lumière s'étendent dans une deuxième direction parallèle à la surface d'affichage et sont disposées dans une troisième direction orthogonale à la deuxième direction,
dans lequel les zones transparentes (41) et les zones de protection contre la lumière (42) sont disposées à un angle θ supérieur à 0 degré et égal ou inférieur à 60 degrés par rapport à la première direction, et
dans lequel la lumière d'affichage émise par le dispositif d'affichage a une intensité lumineuse maximale à l'angle Θ.

2. Appareil d'affichage aérien selon la revendication 1, dans lequel le dispositif de modification du trajet optique est configuré pour émettre la lumière d'affichage qui a été rendue incidente à un premier angle par rapport à la première direction à un deuxième angle par rapport à la première direction.

3. Appareil d'affichage aérien selon la revendication 1, comprenant en outre :
une section de source lumineuse qui émettant une lumière d'illumination vers le dispositif d'affichage,
la section de source lumineuse émet une lumière qui a une intensité lumineuse maximale à l'angle θ par rapport au dispositif d'affichage.
